## Europäisches Patentamt
## European Patent Office
## Office européen des brevets

(19)

(11) Veröffentlichungsnummer: **0 027 186**
**A2**

# (12) EUROPÄISCHE PATENTANMELDUNG

(21) Anmeldenummer: **80105630.0**

(22) Anmeldetag: **19.09.80**

(51) Int. Cl.³: **G 01 B 7/28**
**G 01 B 7/03**

(30) Priorität: **11.10.79 CH 9184/79**

(43) Veröffentlichungstag der Anmeldung:
**22.04.81 Patentblatt 81/16**

(84) Benannte Vertragsstaaten:
**CH DE FR GB IT LI SE**

(71) Anmelder: **Maag-Zahnräder und -Maschinen Aktiengesellschaft**
**Hardstrasse 219**
**CH-8023 Zürich(CH)**

(72) Erfinder: **Sterki, Armin**
**Rinderweid 3**
**CH-8707 Uetikon/a.S.(CH)**

(74) Vertreter: **Hotz, Klaus, Dipl.-El.-Ing. / ETH**
**c/o Maag-Zahnräder und Maschinen Aktiengesellschaft**
**Hardstrasse 219**
**CH-8023 Zürich(CH)**

(54) **Verfahren zum Festlegen der Grenzen einer Messtrecke eines Zahnflankenprüfgerätes sowie Zahnflankenprüfgerät zur Durchführung des Verfahrens.**

(57) Das schematisch dargestellte Zahnflankenprüfgerät umfasst im wesentlichen einen auf einer Kreuzschlittenanordnung (12x, 14x; 12y, 14y) gelagerten Messtaster (28). Die jeweiligen Positionen des Messtasters sind über Zähler (24x) und (24y) detektierbar und der Messtaster selbst mit einem Rechner (32) verbunden. Dieser Rechner hat Zugriff zu einem Speicher (34) und ist über ein Schaltpult (38) steuerbar.

Ferner ist an den Rechner (32) ein Umschalter (36) angeschlossen, der einen X-Positionsregler (26x) wahlweise mit dem Rechner (32) oder mit dem Messtaster (28) verbindet und seinerseits über den Rechner (32) umsteuerbar ist.

Ueber diesen Umschalter lässt sich also das Messignal des Messtasters (28) direkt und ausschliesslich zur Steuerung eines X-Positionsantriebs (18x) heranziehen. Mit dieser Massnahme wird eine Möglichkeit geschaffen, den Messtaster (28) ohne Beschändigung seines sehr empfindlichen Messystems an die Zahnflanke (10) anzufahren.

./...

Fig.1

**0027186**

Case 79-274
SCHWEIZ

## Verfahren zum Festlegen der Grenzen einer Meßstrecke eines Zahnflankenprüfgerätes sowie Zahnflankenprüfgerät zum Durchführen des Verfahrens

Die Erfindung betrifft ein Verfahren zum Festlegen der Grenzen einer Meßstrecke eines Zahnflankenprüfgerätes, bei dem ein Meßtaster auf einer Kreuzschlittenanordnung aus einem in Richtung der Zahnbreite eines Prüflings bewegbaren X-Schlitten und einem in Richtung der Zahnhöhe bewegbaren Y-Schlitten angeordnet ist, jedem dieser Schlitten ein X- bzw. Y-Antrieb samt X- bzw. Y-Servomotor, -Positionsgeber und -Positionsregler zugeordnet ist, beide Antriebe wahlweise manuell oder durch einen programmgesteuerten Rechner steuerbar sind, der neben Signalen der Positionsgeber auch vom Meßtaster selbst entsprechend der Auslenkung seines Tastkopfes abgegebene Signale verarbeitet und den Programmablauf unterbricht, wenn die Auslenkung einen vorbestimmten Betrag überschreitet, und bei dem ein Speicher für die Positionsdaten eines Zahnkopfpunktes und eines Zahnfußpunktes als Grenzen der vom Tastkopf an beliebig vielen Zahnflanken zurückzulegenden Meßstrecke an den Rechner angeschlossen ist, wobei der Tastkopf in den Zahnkopf- bzw. Zahnfußpunkt gefahren wird und die dort vom Meßtaster erreichten Positionsdaten gespeichert werden. Die Erfindung betrifft ferner ein Zahnflankenprüfgerät zum Durchführen eines solchen Verfahrens.

Bei derartigen Zahnflankenprüfgeräten - Beispiele sind in den deutschen Patentanmeldungen P 29 34 347.3 und P 29 34 412.5 beschrieben - haben die Meßtaster einen Meßbereich von etwa 7 bis 40µ. Es handelt sich also um höchst empfindliche Geräte, die schonend behandelt werden müssen. Um zu verhindern, daß der Meßtaster beim Anfahren seines Tastkopfes an eine Zahnflanke oder einen anderen Gegenstand über seinen Meßbereich hinaus ausgelenkt und dadurch überlastet wird, ist dafür gesorgt, daß der Rechner den Programmablauf unterbricht und sämtliche Antriebe stillsetzt, wenn die Auslenkung des Meßtasters einen vorbestimmten Betrag überschreitet. Aus dieser unerläßlichen Sicherheitsmaßnahme können sich indessen erhebliche Schwierigkeiten beim Festlegen der Grenzen einer Meßstrecke ergeben, die der Tastkopf beim Prüfen einer Vielzahl von Zahnflanken eines Prüflings oder mehrerer gleicher Prüfling immer wieder zu durchlaufen hat. Die Grenzen der Meßstrecke ergeben sich nämlich in vielen Fällen nicht einfach aus den Verzahnungsdaten, sondern müssen erst am Prüfling selbst festgelegt werden, ehe sie in den Speicher eingegeben werden können. Es ist üblich, diese Ermittlung in der Weise durchzuführen, daß der Tastkopf durch manuelles Steuern des X-Antriebes und des Y-Antriebes nacheinander an die beiden Punkte einer Zahnflanke gefahren wird, die als Zahnkopfpunkt und als Zahnfußpunkt die Grenzen des Meßbereichs bilden sollen und vom Benutzer des Zahnflankenprüfgerätes derart festgelegt werden, daß einerseits das Zahnflankenprofil auf der interessierenden Länge geprüft wird und andererseits Störungen des automatisch ablaufenden Meßbetriebes durch Anstoßen des Tastkopfes an einem Zahngrund oder Abgleiten des Zahnkopfes an einem Zahnkopf vermieden werden.

Es hat sich in vielen Fällen als äußerst schwierig erwiesen, den Tastkopf durch manuelles Steuern der X- und Y-Antriebe genau in einen gewünschten Zahnfuß- oder Zahnkopfpunkt zu bringen und dabei zu erreichen, daß der Meßtaster an dem betreffenden Punkt innerhalb vorgegebener Grenzen ausgelenkt ist. Wird die größte zulässige Auslenkung überschritten, so wird die beschriebene Sicherheitsmaßnahme wirksam und der gesamte Versuch der Annäherung an den vorgesehenen Zahnfuß- oder Zahnkopfpunkt muß wiederholt werden. Derartiges Mißgeschick widerfährt selbst geübten Benutzern bekannter Zahnflankenprüfgeräte besonders häufig, wenn es gilt, mit dem Zahnkopf einen geeignet erscheinenden Zahnfußpunkt in einer engen Zahnlücke zu erreichen, denn dort kann der Tastkopf nicht nur an die Zahnflanke, sondern auch an den Zahngrund anstoßen. Schwierigkeiten können in diesem Bereich auch dadurch entstehen, daß der Zahnfuß hinterschnitten ist, wobei verhindert werden muß, daß der Tastkopf über die Zahnflanke hinaus in den hinterschnittenen Bereich gelangt.

Andererseits muß bei dem Bemühen, den gewünschten Zahnfuß- oder Zahnkopfpunkt zu erreichen, auch verhindert werden, daß der Tastkopf an diesem Punkt zu wenig ausgelenkt ist, wenn die Positionsdaten der beiden Schlitten gespeichert werden. Eine zu geringe Auslenkung des Tastkopfes bedeutet nämlich, daß der Tastkopf mit zu geringer Vorspannung an der Zahnflanke anliegt und deshalb beim nachfolgenden Abtasten dieser und weiterer Zahnflanken nicht imstande ist, reproduzierbare Meßergebnisse zu liefern.

Der Erfindung liegt deshalb die Aufgabe zugrunde, das eingangs beschriebene Verfahren und einen zu dessen Durchführung geeigneten Meßtaster derart weiterzubilden, daß der Benutzer es erheblich leichter hat, einen von ihm gewählten Zahnfuß- oder Zahnkopfpunkt mit großer Genauigkeit zu erreichen und dort eine innerhalb vorgeschriebener Grenzen liegende Auslenkung des Meßtasters zu erzielen.

Die Aufgabe ist, soweit sie das Verfahren betrifft, erfindungsgemäß dadurch gelöst, daß der Tastkopf an eine beliebige Stelle
zwischen und im Abstand von zwei Zahnflanken des Prüflings gefahren, sodann der X-Positionsregler unter Umgehung des Rechners
mit dem Meßtaster verbunden wird, der Tastkopf durch vom Meßtaster gesteuerte Bewegung des X-Schlittens an beliebiger Stelle
einer dieser Flanken zum Anliegen gebracht und dadurch um den
vorbestimmten Betrag ausgelenkt wird, und der Tastkopf sodann
durch manuelles Steuern des Y-Schlittens bei weiterhin vom
Meßtaster selbst gesteuertem X-Schlitten an der Zahnflanke entlang in den Zahnkopfpunkt und/oder Zahnfußpunkt gefahren wird.

Dem Benutzer ist es ohne weiteres möglich, zunächst den Y-
Schlitten und nötigenfalls auch den X-Schlitten manuell derart
zu steuern, daß der Tastkopf an eine beliebige Stelle, vorzugsweise etwa in der Mitte, zwischen zwei Zahnflanken gelangt
ohne an eine dieser Zahnflanken anzustoßen. Sodann sorgt der
Benutzer dafür, daß der X-Positionsregler unter Umgehung des
Rechners mit dem Meßtaster verbunden wird. Wie dies geschieht,
ist nicht entscheidend; vorzugsweise ist jedoch das beschriebene
Zahnflankenprüfgerät erfindungsgemäß dadurch weitergebildet,
daß der X-Positionsregler durch einen Umschalter  wahlweise
mit dem Rechner oder dem Meßtaster verbindbar ist. Sobald die
Verbindung des X-Positionsreglers mit dem Meßtaster hergestellt
ist und außerdem in üblicher Weise festgelegt worden ist ob
eine rechte oder eine linke Zahnflanke abgetastet werden soll,
steuert der Meßtaster den X-Antrieb selbst.

Dies bedeutet, daß der Tastkopf sich der gewählten Zahnflanke
selbsttätig nähert und den X-Antrieb stillsetzt, sobald er
gegen die Zahnflanke gestoßen und von dieser um den vorgegebenen Betrag ausgelenkt worden ist. Steuert der Benutzer
nun den Y-Schlitten manuell in der einen oder anderen Richtung,
so führt der Meßtaster den X-Schlitten selbsttätig in der
positiven oder negativen X-Richtung derart nach, daß die Auslenkung des Tastkopfes erhalten bleibt. Der Benutzer braucht sich also um diese Auslenkung und den X-Schlitten nicht zu kümmern und kann sich ganz auf die von ihm manuell gesteuerten Bewegungen des Y-Schlittens bzw. die entsprechenden Bewegungen des Tastkopfes konzentrieren.

Somit ist es für den Benutzer ein Leichtes, den gewünschten Zahnfuß- oder Zahnkopfpunkt zu erreichen. Sobald dies geschehen ist, braucht der Benutzer nur noch, beispielsweise durch einen Tastendruck, dafür zu sorgen, daß die Positionsdaten des Tastkopfes in der üblichen Weise gespeichert werden, damit sie vom Rechner später beim Abtasten von Zahnflanken jeweils als Grenzen der Meßstrecke erkannt werden.

Ein Ausführungsbeispiel der Erfindung ist in den beigefügten zeichnungen dargestellt. Es zeigt:

Fig.1 eine schematische Ansicht eines erfindungsgemäßen Zahnflankenprüfgerätes mit zugehörigem Blockschalt- diagramm und

Fig.2a bis 2 d ein Rechnerprogramm zur automatischen Durchführung des erfindungsgemäßen Verfahrens mit dem Zahnflankenprüfgerät gemäß Fig.1.

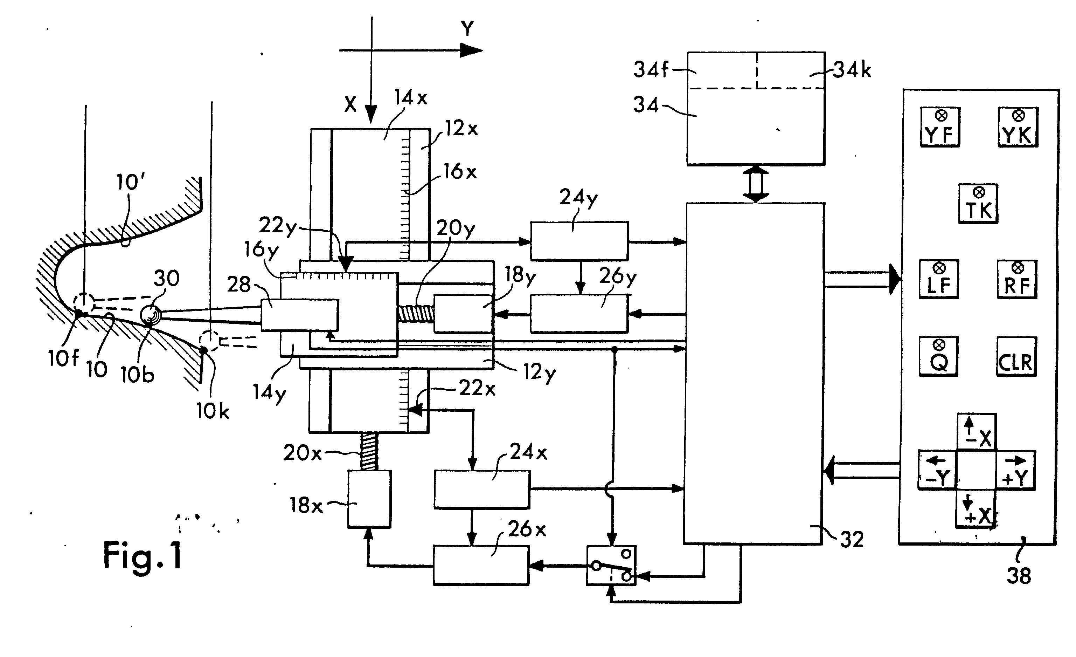

In Fig.1 sind von einer Verzahnung, die geprüft werden soll, eine linke Zahnflanke 10 und eine rechte Zahnflanke 10' dargestellt. An einer dieser Zahnflanken sollen Positionsdaten eines Zahnfußpunktes 10f und eines Zahnkopfpunktes 10k als Grenzen einer Meßstrecke M festgelegt und gespeichert werden.

Das dargestellte Zahnflankenprüfgerät hat eine Führung 12x, die sich in einer zur Verzahnung tangentialen Richtung X erstreckt und deshalb als X-Führung bezeichnet wird. Auf der X-Führung 12x ist ein X-Schlitten 16x geführt, der einen Strichmaßstab 16x aufweist und von einem X-Antrieb 18x über eine Gewindespindel 20x verschiebbar ist. An der X-Führung 12x ist ein Positionsgeber 22x angeordnet, der über einen Zähler 24x an einen Positionsregler 26x angeschlossen ist.

Auf dem X-Schlitten 14x ist eine Y-Führung 14y angeordnet, die sich im Sinne des Pfeils Y radial in bezug auf die zu prüfende Verzahnung, also im rechten Winkel zur X-Führung 12x erstreckt und einen Y-Schlitten 14y führt, der einen Maßstab 16y aufweist und von einem Y-Antrieb 18y über eine Gewindespindel 20y verschiebbar ist. Dem Maßstab 16y ist wiederum ein Positionsgeber 22y zugeordnet, der über einen Zähler 24y an einen Y-Positionsregler 26y angeschlossen ist.

Auf dem Y-Schlitten 14y ist ein Meßtaster 28 angeordnet, der einen auslenkbaren, kugelförmigen Tastkopf 30 aufweist.

Die Zähler 24x und 24y sowie der Meßtaster 28 sind an einen Rechner 32 angeschlossen, dem ein Speicher 34 für Daten und Programme zugeordnet ist. Der Speicher 34 enthält unter anderem Speicherplätze 34f und 34k für die Positionsdaten, die von den Positionsgebern 22x und 22y geliefert werden, wenn der Tastkopf 30 am Zahnfußpunkt 10f bzw. am Zahnkopfpunkt 10k anliegt und dadurch um einen vorgegebenen Betrag ausgelenkt ist. Der Rechner 32 ist unmittelbar mit dem Y-Positionsregler 26y verbunden, der den Betrieb des Y-Antriebs 18y regelt. An den Rechner 32 ist ferner ein Umschalter 36 angeschlossen, der den X-Positionsregler 26x wahlweise mit dem Rechner 32 oder mit dem Meßtaster 28 verbindet und seinerseits über den Rechner 32 steuerbar ist.

Schließlich ist an den Rechner 32 ein Schaltpult 38 angeschlossen, das folgende Tasten aufweist:

0027186

Taste YF    für den Befehl, die Position des
            Y-Schlittens als Ordinate des Zahnfußpunktes 10f zu speichern,

Taste YK    für den Befehl, die Position des Y-Schlittens
            als Ordinate des Zahnkopfpunktes 10k zu speichern,

Taste TK    für den Befehl, den Umschalter aus der
            Stellung gemäß Fig.1 in die Stellung zu
            bringen, in der die Signale des Meßtasters
            28 dem X-Positionsregler 26x unter Umgehung
            des Rechners 32 zugeführt werden,

Taste LF    für den Befehl, die linke Zahnflanke 10
            abzutasten,

Taste RF    für den Befehl, die rechte Zahnflanke 10'
            abzutasten,

Taste Q     Quittiertaste,

Taste CLR   Löschtaste,

Tasten $\pm$X    für manuell gesteuerte Bewegung des
            X-Schlittens 14x in Richtung $\pm$X,

Tasten $\pm$Y    für manuell gesteuerte Bwegung des
            Y-Schlittens 14y in Richtung $\pm$Y.

0027186

P a t e n t a n s p r ü c h e

1. Verfahren zum Festlegen der Grenzen einer Meßstrecke eines Zahnflankenprüfgerätes, bei dem ein Meßtaster auf einer Kreuzschlittenanordnung aus einem in Richtung der Zahnbreite eines Prüflings bewegbaren X-Schlitten und einem in Richtung der Zahnhöhe bewegbaren Y-Schlitten angeordnet ist, jedem dieser Schlitten ein X- bzw. Y-Antrieb mit X- bzw. Y-Servomotor, -Positionsgeber und -Positionsregler zugeordnet ist, beide Antriebe wahlweise manuell oder durch einen programmgesteuerten Rechner steuerbar sind, der neben Signalen der Positionsgeber auch vom Meßtaster selbst entsprechend der Auslenkung seines Tastkopfes abgegebene Signale verarbeitet und den Programmablauf unterbricht, wenn die Auslenkung einen vorbestimmten Betrag überschreitet, und bei dem ein Speicher für die Positionsdaten eines Zahnkopfpunktes und eines Zahnfußpunktes als Grenzen der vom Tastkopf an beliebig vielen Zahnflanken zurückzulegenden Meßstrecke an den Rechner angeschlossen ist, wobei der Tastkopf in den Zahnkopf- bzw. Zahnfußpunkt gefahren wird und die dort vom Meßtaster erreichten Positionsdaten gespeichert werden, dadurch  g e k e n n z e i c h n e t , daß der Tastkopf (30) an eine beliebige Stelle zwischen und im Abstand von zwei Zahnflanken (10,10') des Prüflings gefahren, sodann der X-Positionsregler (26x) unter Umgehung des Rechners (32) mit dem Meßtaster (28) verbunden wird, der Tastkopf (30) durch vom Meßtaster (28) gesteuerte Bewegung des X-Schlittens (14x) an beliebiger Stelle (10b) einer dieser Flanken zum Anliegen gebracht und dadurch um den vorbestimmten Betrag ausgelenkt wird, und der Tastkopf (30) sodann durch manuelles Steuern des Y-Schlittens (14y) bei weiterhin vom Meßtaster (28) selbst gesteuertem X-Schlitten (14x) an der Zahnflanke (10) entlang in den Zahnkopfpunkt (10f) und/oder Zahnfußpunkt (10k) gefahren wird.

2. Zahnflankenprüfgerät zum Durchführen des Verfahrens nach Anspruch 1, bei dem ein Meßtaster auf einer Kreuzschlittenanordnung aus einem in Richtung der Zahnbreite eines Prüflings bewegbaren X-Schlitten und einem in Richtung der Zahnhöhe bewegbaren Y-Schlitten angeordnet ist, jedem dieser Schlitten ein X- bzw. Y-Antrieb mit X- bzw. Y-Servomotor, -Positionsgeber und -Positionsregler zugeordnet ist, beide Antriebe wahlweise manuell oder durch einen programmgesteuerten Rechner steuerbar sind, der neben Signalen der Positionsgeber auch vom Meßtaster selbst entsprechend der Auslenkung seines Tastkopfes abgegebene Signale verarbeitet und den Programmablauf unterbricht, wenn die Auslenkung einen vorbestimmten Betrag überschreitet, und bei dem ein Speicher für die Positionsdaten eines Zahnkopfpunktes und eines Zahnfußpunktes als Grenzen der vom Tastkopf an beliebig vielen Zahnflanken zurückzulegenden Meßstrecke an den Rechner angeschlossen ist, dadurch g e k e n n z e i c h - n e t , daß der X-Positionsregler (26x) durch einen Umschalter (36) wahlweise mit dem Rechner (32) oder dem Meßtaster (28) verbindbar ist.

11.Oktober 1979

Hkl/Lu

Fig. 1

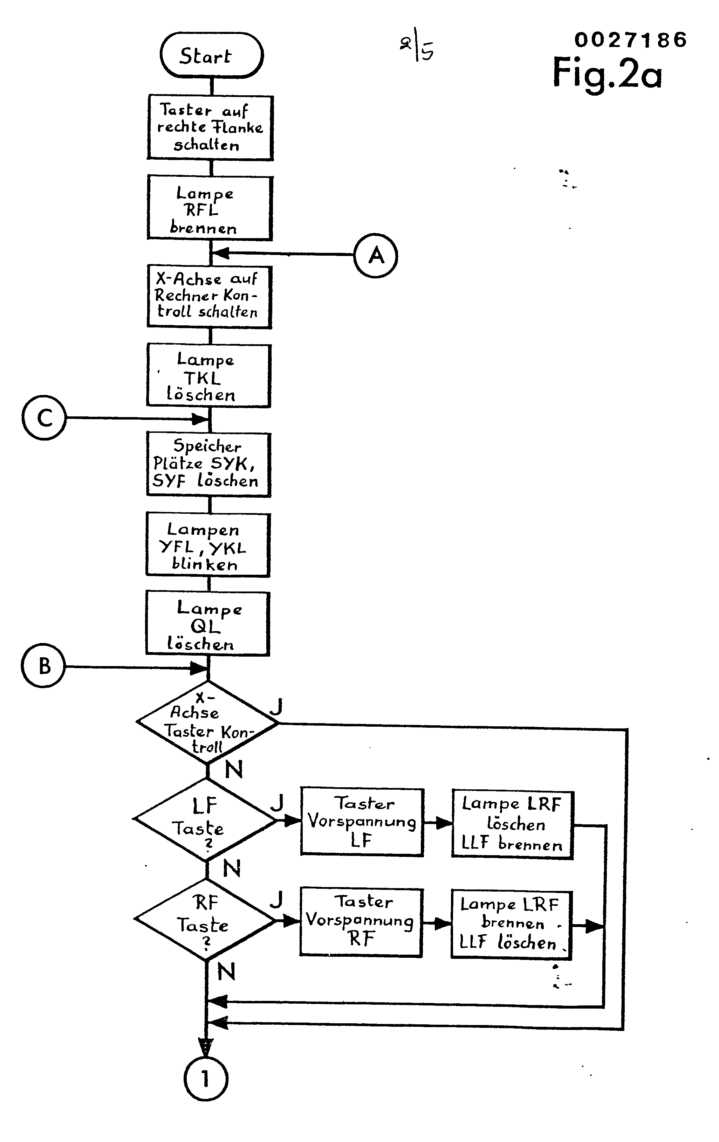

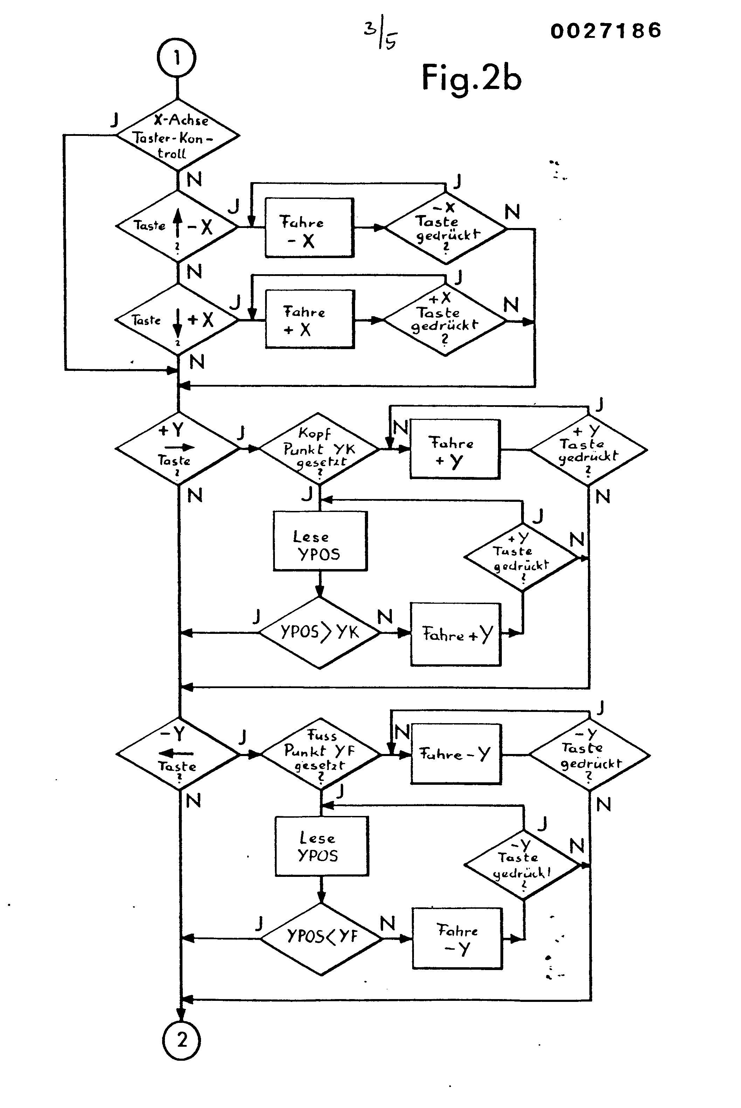

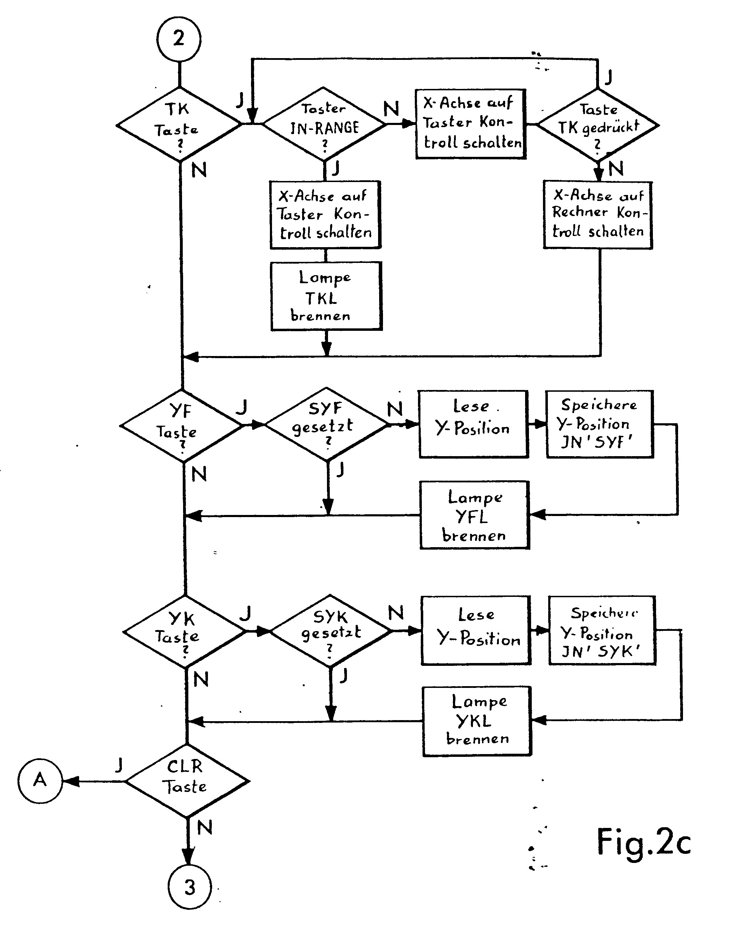

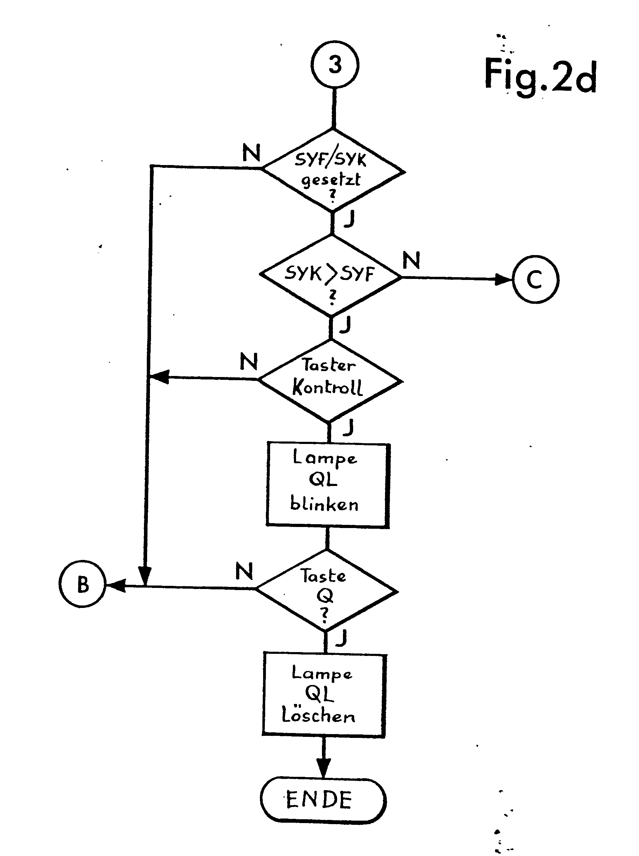

Fig.2a — Flussdiagramm

**Start**

Taster auf rechte Flanke schalten

Lampe RFL brennen

→ A

X-Achse auf Rechner Kontroll schalten

Lampe TKL löschen

C →

Speicher Plätze SYK, SYF löschen

Lampen YFL, YKL blinken

Lampe QL löschen

B →

X-Achse Taster Kontroll — J → (nach rechts)

N

LF Taste ? — J → Taster Vorspannung LF → Lampe LRF löschen LLF brennen

N

RF Taste ? — J → Taster Vorspannung RF → Lampe LRF brennen LLF löschen

N

1

Fig.2b

3/5

0027186

0027186

Fig.2c

# Fig.2d